Europäisches Patentamt

(19) European Patent Office

Office européen des brevets

(11) Numéro de publication: **0 267 069**
**B1**

## (12) FASCICULE DE BREVET EUROPEEN

(45) Date de publication du fascicule du brevet:
28.11.90

(51) Int. Cl.⁵: **G01P 15/12**

(21) Numéro de dépôt: **87402165.2**

(22) Date de dépôt: **29.09.87**

(54) **Procédé de fabrication d'une jauge piézorésistive et d'un accéléromètre comportant une telle jauge.**

(30) Priorité: **02.10.86 FR 8613756**

(43) Date de publication de la demande:
**11.05.88 Bulletin 88/19**

(45) Mention de la délivrance du brevet:
**28.11.90 Bulletin 90/48**

(84) Etats contractants désignés:
**CH DE GB IT LI NL SE**

(56) Documents cités:
**DE-A- 2 614 775**
**FR-A- 2 558 263**
**US-A- 3 417 322**
**US-A- 4 488 445**

(73) Titulaire: **COMMISSARIAT A L'ENERGIE ATOMIQUE,
31/33, rue de la Fédération, F-75015 Paris(FR)**

(72) Inventeur: **Delapierre, Gilles, 7, rue des Laboureurs,
F-38170 Seyssins(FR)**

(74) Mandataire: **Mongrédien, André et al, c/o
BREVATOME 25, rue de Ponthieu, F-75008 Paris(FR)**

## Description

L'invention a pour objet un procédé de fabrication d'une jauge de contrainte piézorésistive sur une face latérale d'une poutre flexible appartenant notamment à un accéléromètre directif ainsi qu'un procédé de fabrication d'un accéléromètre directif munie d'une jauge piézorésistive ces procédés utilisent les techniques de la microélectronique.

De façon générale, un accéléromètre comprend pour l'essentiel une masse mobile m et des moyens permettant de mesurer la force F=m.A due à l'accélération A d'un corps en mouvement.

Un accéléromètre directif réalisé selon les techniques de la microélectronique a notamment été décrit dans le document FR-A-2 558 263 déposé au nom du demandeur.

Sur la figure 1, on a représenté, en perspective, une partie de l'accéléromètre décrit dans ce document. Cet accéléromètre comprend un substrat 2 de forme parallélépipédique comportant un évidement 4 traversant de part en part le substrat.

Dans cet évidement, sont logées deux poutres flexibles 6 et 8 de forme parallélépipédique dont l'épaisseur est beaucoup plus grande que la largeur (30 fois plus typiquement). Ces poutres sont orientées selon une direction y parallèle à la surface du substrat. Ces poutres comportent une extrémité fixe solidaire du substrat 2 et une extrémité libre supportant un bloc 10 de forme parallélépipédique.

Le déplacement du bloc 10 selon la direction x est mesuré à l'aide de détecteurs capacitifs, définis par des dépôts conducteurs sur les faces latérales 12 et 14 du bloc 10 et sur les parois de l'évidement 2 en regard de ces faces 12 et 14.

Cette solution présente l'avantage d'être réalisée facilement selon les technologies de la microélectronique. Toutefois, ces détecteurs capacitifs présentent un certain nombre d'inconvénients. En particulier, ils sont très sensibles aux capacités parasites, ils présentent une haute impédance interne et une réponse non linéaire. En outre, ils ont une influence importante sur les forces électrostatiques engendrées dans l'accéléromètre.

Les poutres 6 et 8 ainsi que le bloc 10 sont monoblocs et définis par gravure anisotrope du substrat 2.

Ils constituent la masse sismique ou mobile de l'accéléromètre. Les poutres 6 et 8 sont susceptibles de se déformer, entraînant un déplacement du bloc 10, selon une direction x parallèle à la surface du substrat et perpendiculaire à la direction y, cette direction x correspondant à la direction de la composante de l'accélération à mesurer.

L'utilisation de jauges de contrainte piézorésistives déposées sur la poutre de cet accéléromètre permettrait de résoudre les inconvénients liés aux capteurs capacitifs.

On rappelle qu'une jauge de contrainte piézorésistive est une bande conductrice dont la résistance varie avec les déformations de la poutre sur laquelle elle est disposée.

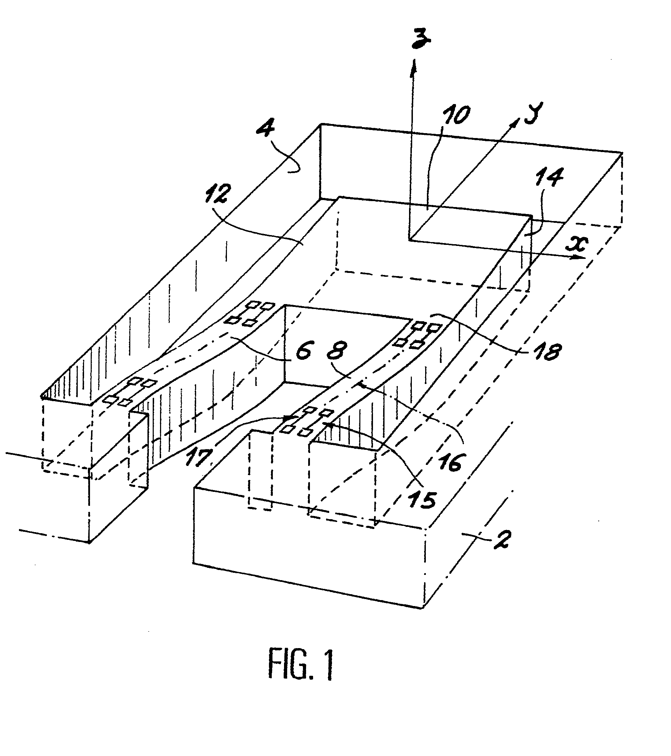

Cette solution a notamment été envisagée dans le document cité ci-dessus. Les jauges, associées deux deux et référencées 15 et 17 sur la figure 1, étaient des résistances disposées sur la face supérieure des poutres, face qui est la seule facilement accessible par les procédés classiques de la micrographie.

Malheureusement, dans ce type d'accéléromètre, on cherche à avoir une flexibilité beaucoup plus grande selon la direction x (parallèle à la surface du substrat, dans lequel est réalisé l'accéléromètre et perpendiculaire à la direction longitudinale de la poutre y) que selon la direction y.

Or, les poutres ont typiquement une largeur de 3 à 10 micromètres pour une épaisseur de quelques centaines de micromètres.

Etant donné que l'on dispose de très peu de place pour disposer les jauges de contrainte sur la surface supérieure des poutres, la réalisation de ces jauges pose de sérieux problèmes technologiques.

Ceci est encore aggravé par le fait que les jauges de contrainte ne peuvent pas être placées selon l'axe médian longitudinal y des poutres puisque sur la fibre neutre 16 des poutres, la déformation selon une direction z perpendiculaire la surface du substrat est nulle. En outre, ces jauges de contrainte ne peuvent pas non plus être placées sur toute la longueur de la poutre puisque, en moyenne, la déformation est nulle.

Ce problème peut être résolu en utilisant des jauges de contrainte, comme représenté sur la figure 1, disposées aux deux extrémités des poutres. Toutefois, lorsqu'on ajoute les conducteurs d'amenée de courants de ces jauges, de sérieux problèmes technologiques se posent dus aux très petites dimensions des éléments de l'accéléromètre. En outre, à supposer que l'on puisse réaliser une telle structure, il subsisterait un problème de dissipation thermique, étant donné que les jauges ne peuvent occuper qu'une très petite surface sur la face supérieure des poutres.

Compte tenu des problèmes de place sur la face supérieure des poutres, les inventeurs ont envisagé de déposer les jauges de contrainte sur les faces latérales des poutres, orientées parallèlement à la direction y et perpendiculairement à la direction x de détection d'une accélération.

Malheureusement, les procédés classiques de la microélectronique, qui utilisent des masques de gravure ou des dépôts, parallèles à la surface du substrat, ne permettent pas de définir avec précision des motifs, sur les faces perpendiculaires au substrat (faces latérales des poutres).

L'invention a justement pour objet un procédé de fabrication d'une jauge de contrainte piézorésistive disposée sur une face latérale d'une poutre flexible notamment d'un accéléromètre, réalisée selon les technologies de la microélectronique.

De façon plus précise, l'invention a pour objet un procédé de fabrication d'une jauge piézorésistive sur une face latérale d'une poutre formée en gravant un substrat perpendiculairement à sa surface et comportant une extrémité susceptible de se déplacer latéralement dans un premier évidement défini dans le substrat, comprenant les étapes suivantes :
- gravure du substrat perpendiculairement à sa surface pour former un second évidement communiquant avec le premier, la zone de communication représentant l'image de la jauge réaliser,
- mise en place à la surface du substrat d'un masque mécanique muni d'une ouverture située en regard du second évidement et se prolongeant en partie sur la face supérieure de la poutre,
- envoi, travers l'ouverture, d'un faisceau de particules susceptible de former une couche piézorésistive constituant la jauge et des prises de contact électrique, ce faisceau étant orienté obliquement par rapport à la surface du substrat,
- suppression du masque, et
- réalisation de conducteurs électriques sur les faces supérieure et inférieure de la poutre en vue d'alimenter en courant la jauge.

Ce procédé de fabrication présente une mise en oeuvre simple.

La jauge piézorésistive peut être formée en déposant un matériau piézorésistif par évaporation sous vide ou, dans le cas d'un substrat en silicium, en implantant des ions par exemple de bore ou de phosphore.

Lorsque la jauge piézorésistive est évaporée, elle est réalisée de préférence en germanium polycristallin dopé avec plusieurs % d'or. Un tel matériau permet d'obtenir un coefficient de jauge transverse Kt suffisamment grand.

Le coefficient transverse d'une jauge est défini dans le cas présent par $(\Delta sy/sy)/(\Delta z/z)$ avec $\Delta sy/sy$ représentant la variation de la conductivité selon l'axe y et $\Delta z/z$ la déformation de la poutre selon l'axe z.

Les conducteurs d'amenée de courant peuvent être déposés à la surface de la poutre soit avant de graver le substrat, soit après avoir déposé la jauge piézorésistive.

Le dépôt des conducteurs électriques peut être réalisé de façon avantageuse par évaporation sous vide.

L'invention a aussi pour objet un procédé de fabrication d'un accéléromètre comportant une jauge piézorésistive obtenue comme précédemment, procédé dans lequel le premier et le second évidements sont formés simultanément par gravure du substrat, perpendiculairement à sa surface.

De façon avantageuse, les premier et second évidements sont formés par gravure chimique anisotrope du substrat.

D'autres caractéristiques et avantages de l'invention ressortiront mieux de la description qui va suivre, donnée titre illustratif et non limitatif, en référence aux figures annexées, dans lesquelles :

- la figure 1, déjà décrite, représente une partie d'un accéléromètre directif réalisé selon les technologies de la microélectronique,
- la figure 2 illustre, en perspective, le procédé de fabrication de jauges de contrainte selon l'invention,
- la figure 3 montre, en perspective, la fabrication des conducteurs d'amenée de courant d'une jauge piézorésistive, réalisée selon le procédé de l'invention, les conducteurs étant réalisés après la jauge,
- la figure 4 montre en perspective une poutre flexible équipée d'une jauge piézorésistive et de conducteurs d'amenée de courant, réalisés selon le procédé de l'invention, les conducteurs étant réalisés avant la jauge,
- les figures 5 à 10 montrent en perspective la fabrication d'un accéléromètre à jauge piézorésistive dans laquelle les conducteurs d'amenée de courant sont réalisés avant la jauge les figures 5 et 6 sont relatives à un substrat en quartz, les figures 7 à 10 à un substrat en silicium.

La description ci-après se réfère à la réalisation d'une seule jauge de contrainte disposée, sur une face latérale d'une poutre d'un accéléromètre réalisé selon les techniques de la microélectronique. Mais bien entendu, l'invention peut être utilisée pour la réalisation simultanée de plusieurs jauges piézorésistives. Dans le cas d'un accéléromètre comportant deux poutres flexibles, les jauges piézorésistives peuvent être au nombre de quatre branchées en pont de Wheatstone. Afin d'assurer une bonne stabilité du pont, les jauges peuvent être déposées simultanément deux par deux.

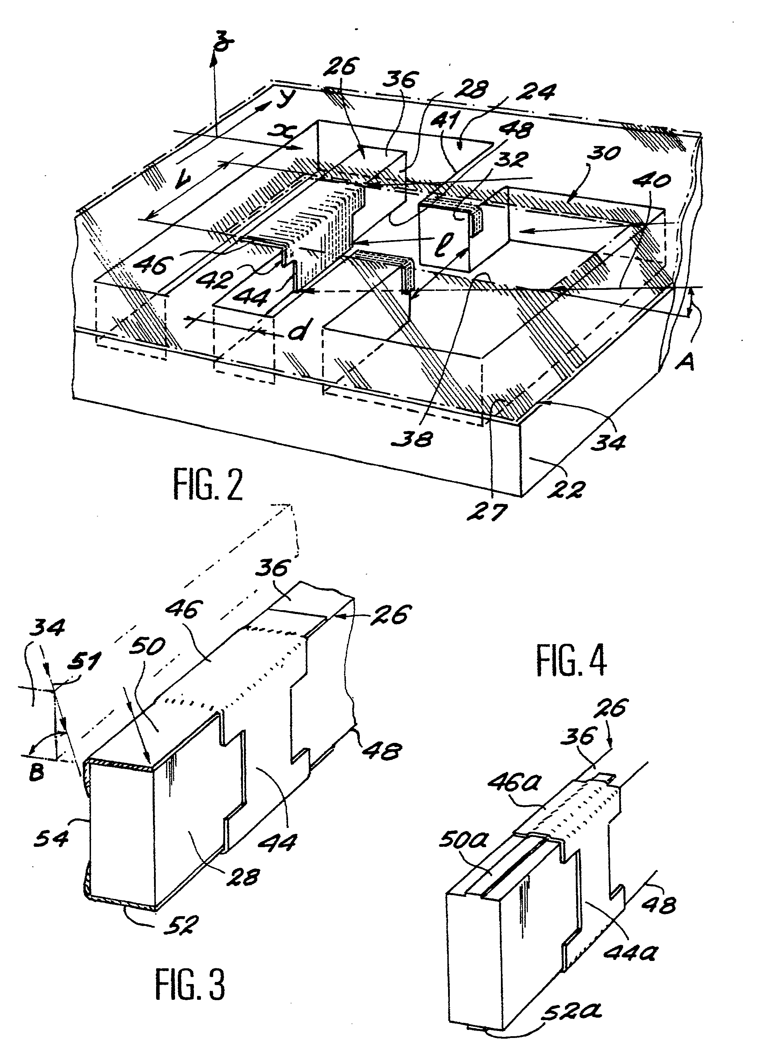

Sur la figure 2, on a représenté en perspective une partie d'un accéléromètre devant être équipé d'une jauge de contrainte piézorésistive réalisée selon le procédé de l'invention.

Cet accéléromètre comprend un substrat 22, en silicium, ou quartz monocristallin, comportant un premier évidement 24, traversant de part et d'autre le substrat 22, dans lequel est logée une poutre flexible 26 ayant la forme d'un parallélépipède rectangle.

Cette poutre 26 ayant une épaisseur 30 fois plus grande que sa largeur est orientée selon une direction y, parallèle à la surface du substrat. Elle comporte une extrémité libre susceptible de se déplacer selon une direction x perpendiculaire à la direction y, et parallèle à la surface du substrat sous l'action d'une accélération dirigée selon cette direction x. L'autre extrémité de la poutre est solidaire du substrat 22.

Cette poutre 26 est obtenue en gravant le substrat 22 perpendiculairement sa surface supérieure 27 de façon anisotrope, par voie chimique, en utilisant un masque de forme appropriée, disposé sur la surface supérieure 27 du substrat.

Pour déposer une jauge piézorésistive sur une face latérale 28 de la poutre 26, on réalise une gravure du substrat, perpendiculairement à sa surface 27, afin de former un second évidement 30 communiquant avec le premier évidement 24. Cette gravure réalisée de façon anisotrope peut être réalisée par voie humide de type chimique.

Cette gravure est réalisée à travers un masque de forme appropriée, réalisé en un matériau conducteur tel qu'une couche d'or sur une couche de chrome et disposé à la surface sulieure 27 du substrat. En outre, cette gravure est réalisée sur toute l'épaisseur du substrat 22.

Le second évidement 30, ayant sur la figure 2 la forme d'un C, est en communication avec le premier évidement 24 par une ouverture 32, formée dans le substrat, représentant l'image de la jauge à réaliser sur la face latérale 28 de la poutre. En particulier, la largeur l de l'ouverture 32 définit la largeur de la jauge à réaliser sur la face latérale 28 de la poutre 26.

On dispose ensuite au-dessus de la surface supérieure 27 du substrat 22 un masque mécanique 34 permettant de définir les dimensions de la zone de contact électrique de la jauge à réaliser sur la face supérieure 36 de la poutre.

A cet effet, le masque 34 comporte une ouverture 38, de forme rectangulaire, située au-dessus du second évidement 30, de l'ouverture 32, et se prolongeant en partie au-dessus du premier évidement 24 et de la face supérieure 36 de la poutre 26. La largeur L de l'ouverture 38 du masque est de préférence supérieure à la largeur l de l'ouverture 32 pratiquée dans le substrat, en regard de la jauge à réaliser.

En utilisant le masque 34 et la découpe (30-32) pratiquée dans le substrat 22 comme masque, on soumet la poutre 26 à un faisceau de particules 40 apte à former un dépôt 42 d'un matériau piézorésistif constituant la jauge, et ses contacts électriques.

Un dépôt 42 en germanium polycristallin dopé avec plusieurs % d'or (5 à 10%) peut être obtenu à l'aide d'un faisceau 40 d'atomes de germanium et d'or. Ce matériau permet d'obtenir un coefficient de jauge transverse Kt suffisamment grand.

Avantageusement, la jauge piézorésistive est déposée par évaporation sous vide, à une vitesse de l'ordre de 1 nm/s.

De préférence, le faisceau de particules 40 est envoyé sur la face latérale 28 de la poutre suivant une incidence rasante. Autrement dit le faisceau 40 forme un angle A avec la surface supérieure 27 du substrat 22. Cet angle dépend de l'épaisseur du masque 34, des dimensions de l'ouverture 38 du masque et de la distance d séparant la face 28 de la poutre 26 et la face latérale 41 de l'évidement 24, en regard.

Il varie de 10 à 30° et est typiquement égal à 20° pour un masque 34 de 0,15 mm d'épaisseur afin d'avoir un dépôt piézorésistif 42 d'épaisseur suffisante présentant une partie latérale 44 constituant à proprement parler la jauge piézorésistive, située sur la face latérale 28 et s'étendant sur toute l'épaisseur d la poutre, et des parties telles que 46 recouvrant respectivement les faces supérieures 36 et inférieure 48 de la poutre 26 définissant les zones de contact électrique de la jauge. Cette inclinaison permet en outre d'éviter de recouvrir exagérément la partie 44 de la poutre.

Ensuite, on réalise les conducteurs électriques servant à amener le courant à la jauge piézorésistive 44, ces conducteurs électriques reposant bien entendu sur les prises de contact 46.

Comme représenté sur la figure 3, ces conducteurs sont déposés sur les faces supérieure et inférieure 36 et 48 de la poutre 26. Le conducteur d'amenée de courant, réalisé par exemple sur la face supérieure 36 de la poutre porte la référence 50 et le conducteur de sortie de courant, disposé par exemple sur la face inférieure 48 de la poutre, porte la référence 52.

Ces conducteurs 50 et 52 sont déposés par évaporation sous vide en utilisant le masque à mécanique 34 et la découpe (30-32) du substrat comme masque l'évaporation. Le faisceau de particules 51 correspondant forme un angle B avec la surface supérieure du substrat. Cet angle est choisi de façon que la face latérale 54 de la poutre, opposée à la face 28, ne soit récouverte que partiellement du dépôt conducteur pour ne pas mettre la jauge en court-circuit. L'angle B est par exemple compris entre 30 et 60°.

Les conducteurs 50 et 52 sont réalisés en particulier en or ou en aluminium.

Comme représenté sur l a figure 4, il est aussi possible de réaliser les conducteurs électriques 50a et 52a de la jauge piézorésistive 44a, disposés respectivement sur les surfaces supérieure 36 et inférieure 48 de la poutre 26, avant de réaliser cette jauge 44a et ses contacts électriques 46a, comme décrit en référence à la figure 2.

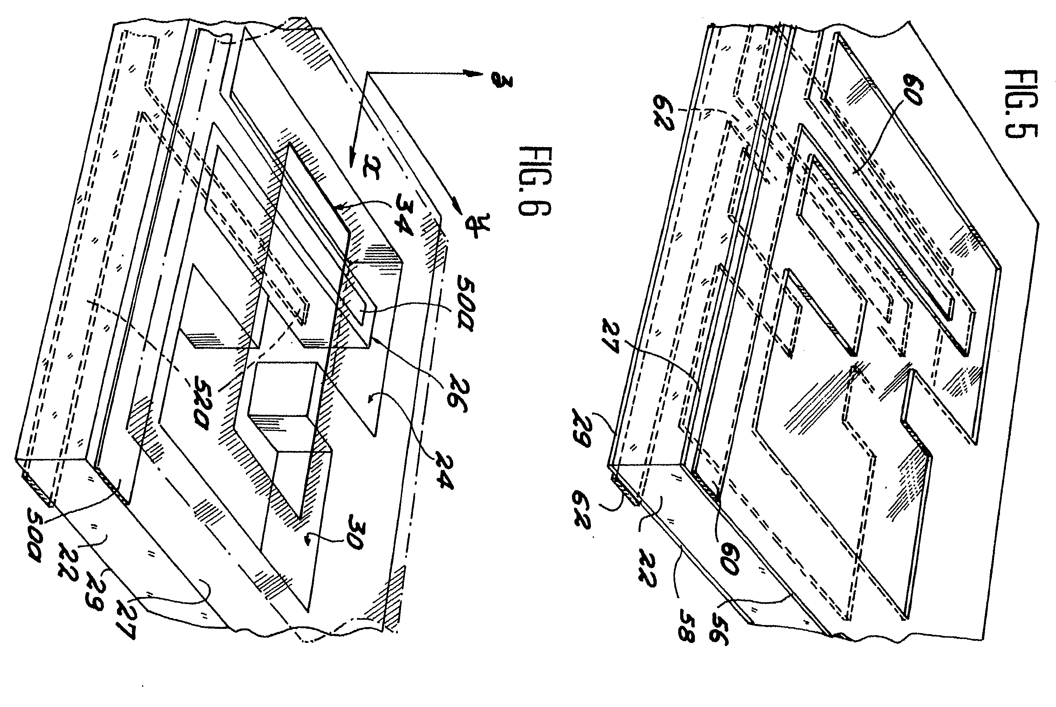

En référence aux figures 5 et 6, on décrit ci-après la fabrication d'un accéléromètre à jauge de contrainte piézorésistive, dans laquelle les conducteurs d'amenée de courant de la jauge sont réalisés avant la jauge, le substrat étant en quartz.

Sur la totalité des faces supérieure et inférieure 27 et 29 d'un substrat 22 en quartz, on forme respectivement deux couches conductrices 56 et 58 par évaporation sous vide. Ces couches 56 et 58 sont par exemple formées d'une couche d'or sur une couche de chrome.

On forme ensuite respectivement sur les couches 56 et 58 deux masques de résine représentant chacun l'image de la poutre flexible 26 de l'accéléromètre (figure 4), des premier et second évidements du substrat et on réalise à travers ces masques une première gravure chimique des couches 56 et 58 (figure 5). On élimine ensuite les ix masques de gravure.

L'une des couches conductrices 56 et 58 ainsi gravées servira ultérieurement de masque de gravure du substrat 22.

On forme à nouveau sur les couches 56 et 58 gravées deux masques de résine 60 et 62 représentant l'image des conducteurs d'amenée de courant, respectivement 50a et 52a (figure 4) à réaliser.

On effectue alors, comme représenté sur la figure 6, une gravure chimique anisotrope du substrat 22 en utilisant par exemple la couche 56 gravée comme masque. Cette gravure du substrat est réalisée perpendiculairement à sa surface supérieure 27 (direction z) afin de former les premier 24 et second 30 évidements et la poutre flexible 26 de l'accéléromètre. En outre cette gravure est réalisée sur toute l'épaisseur du substrat.

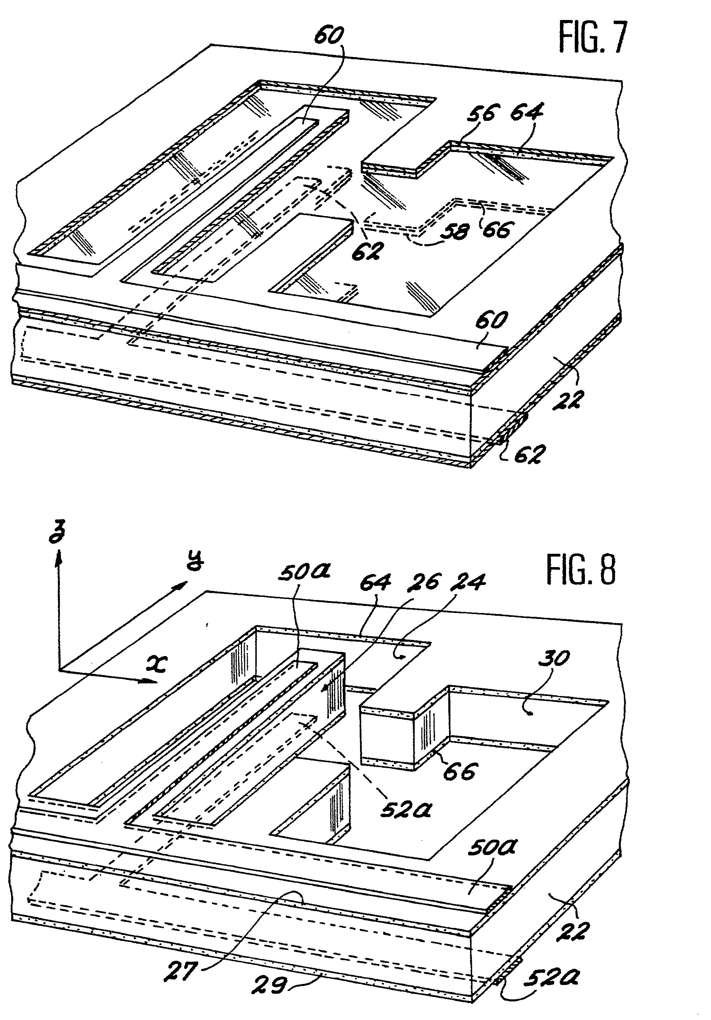

A l'aide des masques de résine 60 et 62, on effectue alors une seconde gravure des couches 56 et 58 afin de former les conducteurs 50a et 52a (figure 8) d'amenée de courant de la jauge piézorésistive.

Après élimination des masques 60 et 62, on dispose par exemple sur la face supérieure 27 du substrat, le masque mécanique 34 permettant de définir les dimensions latérales de la jauge. On effectue alors, comme décrit à la figure 2, le dépôt de la jauge piézorésistive et de ses contacts électriques, par évaporation sous vide, sur les face 28, 36 et 48 de la poutre 26.

Avec une jauge piézorésistive en germanium polycristallin dopé avec 10% d'or ayant une largeur (égale à l) de 50 micromètres, une longueur (égale à l'épaisseur du substrat, donc de la poutre) de 150 micromètres et une épaisseur de 0,2 micromètre, on obtient une résistance de l'ordre de 6 k.ohm. En utilisant un pont de Wheatstone de quatre jauges, réalisées comme ci-dessus sur des poutres en quartz monocristallin, et une déformation de la poutre de l'ordre de $0,5.10^{-3}$ on obtient un accéléromètre fournissant un signal de 7,5 mV par volt d'alimentation. Ceci est tout à fait correct comparé aux 3 mV par volt d'alimentation obtenus avec les accéléromètres classiques.

Sur les figures 7 à 10, on a représenté la fabrication d'un accéléromètre à jauge de contrainte piézorésistive dans laquelle les conducteurs d'amenée de courant sont encore réalisés avant la jauge mais dans laquelle le substrat est en silicium.

Par rapport au procédé décrit en référence aux figures 5 et 6, on interpose entre le substrat 22 et respectivement les couches conductrics 56 et 58, deux couches isolantes 64 et 66 formées de $Si_3N_4$ et/ou de $SiO_2$ et déposées par CVD (dépôt chimique en phase vapeur) ou oxydation thermique pour $SiO_2$.

Après formation d'un masque de résine sur chacune des couches conductrices 56 et 58 représentant l'image de la poutre flexible et des premier et second évidements du substrat, on réalise une première gravure des couches conductrices 56 et 58 puis des couches isolantes 64 et 66 (figure 7). Ensuite on élimine ces masques.

Les couches isolantes 64 ou 66 ainsi gravées serviront ultérieurement de masque de gravure du substrat 22.

On forme alors les masques 60 et 62 représentant l'image des conducteurs d'amenée de courant 50a et 52a (figure 8) à réaliser.

On effectue ensuite, comme représenté sur la figure 8, une seconde gravure des couches conductrices 56 et 58 pour former les conducteurs d'amenée, puis on élimine les masques 60 et 62.

En utilisant par exemple les couches isolantes 64 et 66 gravées comme masque, on effectue une gravure chimique anisotrope du substrat 22, sur toute son épaissur, selon la direction z perpendiculaire la surface supérieure 27 du substrat. Ceci permet de former les premier 24 et second 30 évidements ainsi que la poutre 26 de l'accéléromètre.

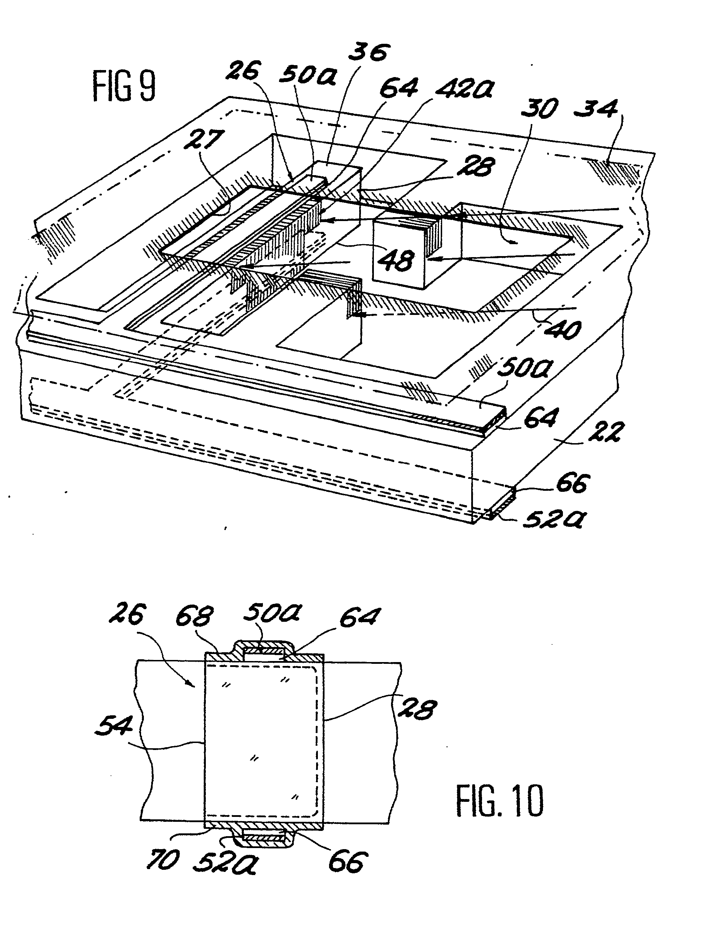

Ensuite on effectue (figure 9) une seconde gravure chimique des couches isolantes 64 et 66 en utilisant respectivement les conducteurs 50a et 52a comme masque.

On dispose alors sur la surface supérieure 27 du substrat le masque mécanique 34 et on implante à travers ce masque des ions de bore ou de phosphore pour former, dans les faces 28, 36 et 48 une couche 42a piézorésistive, constituant la jauge et ses contacts électriques. L'inclinaison du faisceau d'ions 40 est comprise entre 10 et 30° afin d'éviter toute implantation d'ions dans la face latérale 54 (figure 10) de la poutre 26, opposée à la face 28.

Une deuxième implantation selon l'angle B (figure 2) peut être réalisée éventuellement en vue d'obtenir un dopage plus important des faces supérieure et inférieure de la poutre.

On effectue ensuite, comme représenté sur la figure 10, deux dépôts conducteurs 68 et 70, par exemple en aluminium, sur et sous la poutre 26 permettant de relier électriquement la couche implantée 42a, d'une part, au conducteur supérieur 50a, et d'autre part, au conducteur inférieur 52a.

Dans le cas d'un substrat en silicium, avec des poutres flexibles 26 obtenues par gravure chimique anisotrope, les faces latérales et en particulier la face 28 de la poutre, doivent être des plans (111) du silicium afin que le coefficient de jauge transverse Kt est dans ce cas voisin de 30, indépendamment de la direction des jauges. Dans de telles conditions, le signal de sortie d'un accéléromètre équipé de quatre jauges implantées, branchées en pont de Wheatstone, est d'environ 15 mV par volt d'alimentation, ce qui, là encore, est tout à fait correct.

## Revendications

1. Procédé de fabrication d'une jauge piézorésistive (44, 44a) sur une face latérale (28) d'une poutre (26) formée en gravant un substrat (22) perpendiculairement à sa surface (27) et comportant une extrémité susceptible de se déplacer latéralement (x) dans un premier évidement (24) défini dans le substrat (22), comprenant les étapes suivantes :
- gravure du substrat (22) perpendiculairement à sa surface pour former un second évidement (30) communiquant avec le premier (24), la zone de communication (32) représentant l'image de la jauge (44, 44a) à réaliser,
- mise en place à la surface du substrat (22) d'un masque mécanique (34) munie d'une ouverture (38) située en regard du second évidement (30) et se prolongeant en partie sur la face supérieure (36) de la poutre (26),
- envoi, à travers l'ouverture (38), d'un faisceau de particules (40, 40a) susceptibles de former une couche piézorésistive (42, 42a) constituant la jauge (44, 44a) et des prises de contact électrique (46), ce faisceau étant orienté obliquement par rapport à la surface du substrat,
- suppression du masque (34), et
- réalisation de conducteurs électriques (50-52, 50a-52a) sur les faces supérieure (36) et inférieure (48) de la poutre (26) en vue d'alimenter en courant la jauge (44).

2. Procédé de fabrication selon la revendication 1, caractérisé en ce que la couche piézorésistive (42) est formée d'un matériau piézorésistif déposé par évaporation sous vide.

3. Procédé de fabrication selon la revendication 2, caractérisé en ce que le matériau piézorésistive (42) est du germanium polycristallin dopé à l'or.

4. Procédé de fabrication selon la revendication 1, caractérisé en ce que la couche piézorésistive (42a) est formée en implantant des ions dans le substrat (22), ce dernier étant en silicium.

5. Procédé de fabrication selon l'une quelconque des revendications 1 à 4, caractérisé en ce que les conducteurs électriques (50a, 52a) sont réalisés avant la jauge piézorésistive (44a).

6. Procédé de fabrication selon l'une quelconque des revendications 1 à 5, caractérisé en ce que les conducteurs électriques (50, 52) sont réalisés aprés la jauge piézorésistiv (44) par évaporation sous vide.

7. Procédé de fabrication d'un accéléromètre à jauge piézorésistive, comportant une poutre (26) dont une extrémité est susceptible de se déplacer latéralement (x) dans un premier évidement (24) formé dans un substrat (22), la jauge piézorésistive (44, 44a), réalisée sur une face latérale (28) de la poutre servant à mesurer les déplacements de ladite poutre, ce procédé étant caractérisé en ce qu'il comprend les étapes suivantes :

- gravure du substrat (22) perpendiculairement à sa surface pour former simultanément le premier évidement (24) et un second évidement (30) communiquant avec le premier (24), la zone de communication (32) représentant l'image de la jauge (44, 44a) à réaliser,
- mise en place à la surface du substrat (22) d'un masque mécanique (34) munie d'une ouverture (38) située en regard du second évidement (30) et se prolongeant en partie sur la face supérieure (36) de la poutre (26),
- envoi, à travers l'ouverture (38), d'un faisceau de particules (40, 40a) susceptible de former une couche piézorésistive (42, 42a) constituant la jauge (44, 44a) et des prises de contact électrique (46), ce faisceau étant orienté obliquement par rapport à la surface du substrat,
- suppression du masque (34), et
- réalisation de conducteurs électriques (50-52, 50a-52a) sur les faces supérieure (36) et inférieure (48) de la poutre (26) en vue d'alimenter en courant la jauge (44).

8. Procédé de fabrication selon la revendication 7, caractérisé en ce qu'il comprend les étapes suivantes :
- dépôt de deux couches conductrices (56, 58) respectivement sur les faces supérieure (27) et inférieure (29) du substrat (22) dans lesquelles seront réalisés les conducteurs électriques (50a, 52a) d'alimentation en courant de la jauge (44a),
- première gravure des deux couches conductrices (56, 58) afin de former un premier masque de gravure du substrat (22) représentant l'image des premiers (24) et second (30) évidements,
- gravure du substrat (22) perpendiculairement à ses surfaces supérieure (27) et inférieure (29) pour former les évidements (24, 30) en utilisant le premier masque,
- deuxième gravure des couches conductrices (56, 58) afin de former les conducteurs électriques (50a, 52a),
- mise en place (34) sur la surface supérieure (27) du substrat (22) du masque mécanique (34),
- envoi du faisceau (40) de particules, à travers l'ouverture du masque mécanique, et
- suppression du masque mécanique (34).

9. Procédé de fabrication selon la revendication 7 ou 8, caractérisé en ce que l'on forme le premier et le second évidements (24, 30) par gravure chimique anisotrope du substrat (22).

**Patentansprüche**

1. Verfahren zum Herstellen eines Dehnungsmeßstreifens mit Piezowiderstand (44, 44a) auf einer Seitenfläche (28) eines Trägers (26), der gebildet wird, indem ein Substrat (22) senkrecht zu seiner Oberfläche (27) geätzt wird, und der ein Ende aufweist, das geeignet ist, sich lateral (x) in eine erste, durch das Substrat (22) gebildete Öffnung (24) zu bewegen, mit folgenden Verfahrensschritten:

– Ätzen des Substrats (22) senkrecht zu seiner Oberfläche, um eine zweite Öffnung (30) zu bilden, die mit der ersten (24) In Verbindung steht, wobei der Verbindungsbereich (32) das Bild des herzustellenden Dehnungsmeßstreifens (44, 44a) darstellt,
– Aufbringen einer mechanischen Maske (34) auf die Oberfläche des Substrats (22), die mit einer Öffnung (38) versehen ist, die sich gegenüber der zweiten Öffnung (30) befindet und sich zum Teil auf die oberen Seite (36) des Trägers (26) erstreckt,
– Senden eines Teilchenstrahls (40, 40a) durch die Öffnung (38) der geeignet ist, eine Piezowiderstandsschicht (42, 42a), die den Dehnungsmeßstreifen (44, 44a) darstellt, und elektrische Kontakte (46) zu bilden, wobei dieser Strahl schräg bezüglich der Oberfläche des Substrats geneigt ist,
– Entfernen der Maske (34), und
– Ausführen von elektrischen Leitern (50-52, 50a-52a) auf der oberen (36) und unteren Seite (48) des Trägers (26), um den Dehnungsmeßstreifen (44) mit Strom zu versorgen zu können.

2. Herstellungsverfahren nach Anspruch 1, dadurch gekennzeichnet, daß die Piezowiderstandsschicht (42) aus einem Piezowiderstandsmaterial besteht, das durch Vakuumverdampfung aufgebracht wird.

3. Herstellungsverfahren nach Anspruch 2, dadurch gekennzeichnet, daß das Piezowiderstandsmaterial (42) aus mit Gold dotiertem, polykristallinem Germanium besteht.

4. Herstellungsverfahren nach Anspruch 1, dadurch gekennzeichnet, daß die Piezowiderstandsschicht (42a) durch Ionenimplantation in das Substrat (22) hergestellt wird, wobei letzteres aus Silizium besteht.

5. Herstellungsverfahren nach einem der Ansprüche 1 bis 4, dadurch gekennzeichnet, daß die elektrischen Leiter (50a, 52a) vor dem Dehnungsmeßstreifen mit Piezowiderstand (44a) erzeugt werden.

6. Herstellungsverfahren nach einem der Ansprüche 1 bis 4, dadurch gekennzeichnet, daß die elektrischen Leiter (50, 52) nach dem Dehnungsmeßstreifen mit Piezowiderstand (44) durch Vakuumverdampfen erzeugt werden.

7. Verfahren zum Herstellen eines Beschleunigungsmessers mit Dehnungsmeßstreifen mit Piezowiderstand mit einem Träger (26), der ein Ende aufweist, das geeignet ist, sich lateral (x) in eine erste, durch das Substrat (22) gebildete Öffnung (24) zu bewegen, wobei der Dehnungsmeßstreifen mit Piezowiderstand (44, 44a) auf einer Seitenfläche (28) des Trägers ausgeführt ist und zum Messen der Bewegungen des Trägers dient, wobei das Verfahren dadurch gekennzeichnet, ist, daß es die folgenden Verfahrensschritte aufweist:

– Ätzen des Substrats (22) senkrecht zu seiner Oberfläche um eine zweite Öffnung (30) zu bilden, die mit der ersten (24) in Verbindung steht, wobei der Verbindungsbereich (32) das Bild des herzustellenden Dehnungsmeßstreifens (44, 44a) darstellt,

– Aufbringen einer mechanischen Maske (34) auf die Oberfläche des Substrats (22), die mit einer Öffnung (38) versehen ist, die sich gegenüber der zweiten Öffnung (30) befindet und sich zum Teil auf die oberen Seite (36) des Trägers (26) erstreckt,

– Senden eines Teilchenstrahls (40, 40a) durch die Öffnung (38), der geeignet ist, eine Piezowiderstandsschicht (42, 42a), die den Dehnungsmeßstreifen (44, 44a) darstellt, und elektrische Kontakte (46) zu bilden, wobei dieser Strahl schräg bezüglich der Oberfläche des Substrats geneigt ist,

– Entfernen der Maske (34), und

– Ausführen von elektrischen Leitern (50–52, 50a–52a) auf der oberen (36) und unteren Seite (48) des Trägers (26), um den Dehnungsmeßstreifen (44) mit Strom zu versorgen zu können.

8. Herstellungsverfahren nach Anspruch 7, dadurch gekennzeichnet, daß es die folgenden Verfahrensschritte aufweist:

– Abscheiden von zwei leitenden Schichten (56, 68) jeweils auf der oberen (27) und der unteren (29) Seite des Substrats (22), in denen die elektrischen Leiter (50, 50a) zur Stromversorgung des Dehnungsmeßstreifens (44a) ausgeführt werden,

– erstes Ätzen der beiden leitenden Schichten (56, 58), um eine erste Maske für das Ätzen des Substrats (22) zu erzeugen, die das Bild der ersten (24) und zweiten (30) Öffnung darstellt,

– Ätzen des Substrats (22) senkrecht zu seiner oberen (27) und unteren (29) Seite, um die Öffnungen (24, 30) unter Verwendung der ersten Maske herzustellen,

– zweites Ätzen der leitfähigen Schichten (56, 58), um die elektrischen Leiter (50a, 52a) zu bilden,

– Anbringen der mechanischen Maske (34) auf der oberen Seite (27) des Substrats (22),

– Senden eines Teilchenstrahls (40) durch die Öffnung der mechanischen Maske, und

– Entfernen der mechanischen Maske (34).

9. Herstellungsverfahren nach Anspruch 7 oder 8, dadurch gekennzeichnet, daß die erste und die zweite Öffnung (24, 30) durch anisotropes, chemisches Ätzen des Substrats (22) hergestellt werden.

## Claims

1. Process for the production of a piezoresistive gauge (44, 44a) on a lateral face (28) of a beam (26) formed by etching a substrate (22) perpendicular to its surface (27) and having an end which can move laterally (x) in a first recess (24) defined in the substrate (22) comprising the stages of etching the substrate (22) perpendicular to its surface for forming a second recess (30) communicating with the first (24), the communication zone (32) representing the image of the gauge (44, 44a) to be produced, placing on the surface of the substate (22) a mechanical mask (34) having an opening (38) facing the second recess (30) and partly extended over the upper face (36) of the beam (26), passing through said opening (38) a particle beam (40, 40a) able to form a piezoresistive layer (42, 42a) constituting the gauge (44, 44a) and electric contacts (46), said beam being oriented obliquely with respect to the substrate surface, elimination of the mask (34) and producing electrical conductors (50–52, 50a–52a) on the upper (36) and lower (48) faces of the beam (26) with a view to supplying the gauge (44) with electric current.

2. Production process according to claim 1, characterized in that the piezoresistive layer (42) is formed from a piezoresistive material deposited by a vacuum evaporation.

3. Production process according to claim 2, characterized in that the piezoresistive material (42) is gold-doped polycrystalline germanium.

4. Production process according to claim 1, characterized in that the piezoresistive layer (42a) is formed by implanting ions in the substrate (22), the latter being of silicon.

5. Production process according to any one of the claims 1 to 4, characterized in that the electrical conductors (50a, 52a) are produced before the piezoresistive gauge (44a).

6. Production process according to any one of the claims 1 to 5, characterized in that the electrical conductors (50, 52) are produced after the piezoresistive gauge (44) by vacuum evaporation.

7. Process for producing an accelerometer with a piezoresistive gauge, having a beam (26), whereof one end can move laterally (x) in a first recess (24) formed in a substrate (22), the piezoresistive gauge (44, 44a), produced on a lateral face (28) of the beam being used for measuring the displacement of said beam, characterized in that it comprises etching the substrate (22) perpendicular to its surface in order to simultaneously form the first recess (24) and a second recess (30) communicating with the first recess (24), the communication zone (32) representing the image of the gauge (44, 44a) to be produced, placing on the surface of the substrate (22) a mechanical mask (34) provided with an opening (38) facing the second recess (30) and partly extending over the upper face (36) of the beam (26), passing through the said opening (38) a particle beam (40, 40a) able to form a piezoresistive layer (42, 42a) constituting the gauge (44, 44a) and electric contacts (46), said beam being oriented obliquely with respect to the substrate surface, elimination of the mask (34) and production of electrical conductors (50–52, 50a–52a) on upper (36) and lower (48) faces of the beam (26) in order to supply the gauge (44) with electric power.

8. Production process according to claim 7, characterized in that it comprises the stages of depositing two conductive layers (56, 58) respectively on the upper (27) and lower (29) faces of the substrate (22), in which will be produced the electrical conductors (50a, 52a) for supplying power to the gauge (44a), first etching of the two conductive layers (56, 58) in order to form a first etching mask of the substrate (22) representing the image of the first (24) and second (30) recesses, etching the substrate (22) perpendicular to its upper (27) and lower (29) surfaces to form recesses (24, 30) using the first mask, second etching of the conductive layers (56, 58) in order to form the electrical conductors (50a, 52a), placing the mechanical mask (34) on the upper surface (27) of the substrate (22), passing the particle beam (40) through the mechanical mask opening and eliminating the mechanical mask (34).

9. Production process according to claims 7 or 8, characterized in that the first and second recesses (24, 30) are formed by anisotropic chemical etching of the substrate (22).

FIG. 1

FIG. 2

FIG. 3

FIG. 4

FIG. 5

FIG. 6

FIG. 7

FIG. 8

FIG 9

FIG. 10